# EUROPÄISCHE PATENTSCHRIFT

(11) **EP 1 509 439 B1**
(45) Veröffentlichungstag und Bekanntmachung des Hinweises auf die Patenterteilung: **18.04.2007**
(21) Anmeldenummer: 03725095.8
(22) Anmeldetag: 25.04.2003
(51) Int. Cl.: B62K 21/04

(54) **GABELBRÜCKE**
FORK BRIDGE
PONT DE FOURCHE

(30) Priorität: 31.05.2002 DE 10224093
(43) Veröffentlichungstag der Anmeldung: 02.03.2005
(73) Patentinhaber: Bayerische Motoren Werke Aktiengesellschaft, 80809 München (DE)
(72) Erfinder: LEDERER, Markus, 81671 München (DE)
(86) Internationale Anmeldenummer: PCT/EP2003/004300
(87) Internationale Veröffentlichungsnummer: WO 2003/101814

(56) Entgegenhaltungen:
- DE-A- 4 444 651
- FR-A- 2 653 403

## Beschreibung

Die vorliegende Erfindung betrifft eine Gabelbrücke gemäß dem Oberbegriff des Patentanspruches 1.

Aus der FR-2 653 403 A ist eine Gabelbrücke mit einer Durchgangsbohrung bekannt, die einen Teilabschnitt des Bremsleitungssystems für die Vorderradbremse eines Motorrads bildet.

Moderne Motorräder weisen am Vorderrad häufig eine linke und eine rechte Bremse auf. Bei bisherigen Konstruktionen wird der Bremsdruck zu den beiden Bremssätteln über ein Verteilerstück und Schläuche bzw. Leitungen auf die beiden Vorderradbremsen aufgeteilt. Dieses Verteilerstück ist üblicherweise im Bereich der Gabelbrücke an der Vorderradführung als separates Bauteil montiert und verteilt den von der Handarmatur eingesteuerten Bremsdruck gleichmäßig auf beide Bremssättel.

Aufgabe der Erfindung ist es, eine Gabelbrücke mit erweiterter Funktionalität zu schaffen.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von der Idee aus, einen Teilabschnitt eines hydraulischen Kreises eines Motorrads in eine Fahrwerkskomponente zu integrieren. Unter dem Begriff "hydraulischer Kreis" kann beispielsweise ein hydraulischer Bremskreis, ein hydraulischer Kupplungskreis, ein Kühlkreis oder ein Kraftstoffkreis etc. verstanden werden. Die Fahrwerkskomponente kann beispielsweise eine Gabelbrücke einer Vorderradgabel sein. Konkreter gesagt ist in der Fahrwerkskomponente bzw. in der Gabelbrücke ein "Fluidsystem" vorgesehen, das z.B. als "Bremsleitungsabschnitt" oder als Kupplungsleitungsabschnitt fungiert.

Wenngleich im folgenden von "Gabelbrücke" die Rede ist beziehen sich sämtliche Erläuterungen ganz allgemein auf Fahrwerkskomponenten, wie z.B. den Rahmen etc. Wenn von Bremsleitung die Rede ist, dann ist dies ebenfalls nur expemplarisch zu verstehen und gilt auch für andere Fluidsysteme, wie z.B. hydraulische Kupplungsleitungen.

Der Kern der Erfindung besteht darin, auf das Verteilerstück vollkommen zu verzichten, indem in der Gabelbrücke ein Fluidkanal vorgesehen wird der sich in Zweigkanäle, vorzugsweise in zwei Zweigkanäle verzweigt. Der Fluidkanal ist über einen Fluidanschluss und eine Bremsleitung mit dem Handbremshebel verbunden. An den Enden der Zweigkanäle sind ebenfalls Fluidanschlüsse vorgesehen, die mit der linken bzw. rechten Vorderradbremse verbunden sind. Die in die Gabelbrücke der Vorderradführung integrierten "Kanäle" dienen also als "Bremsleitungsverzweigung".

Vorzugsweise sind der Fluidkanal und die beiden Zweigkanäle in der Form eines Y angeordnet. Der Fluidanschluss des Fluidkanals kann im fahrerseitigen Mittelbereich, das heißt im hinteren Bereich der Gabelbrücke angeordnet sein und die Fluidanschlüsse der Zweigkanäle können in einem linken bzw. rechten in Bezug auf den Fahrer vorderen Bereich der Gabelbrücke angeordnet sein. Diese Anordnung ist aber nicht zwingend. Die Fluidkanäle können auch in anderer Weise ausgerichtet sein.

Nach einer Weiterbildung der Erfindung weisen die Fluidanschlüsse jeweils eine Gewindebohrung auf, die eine Verbindung mit entsprechenden Verbindungselementen der Bremsleitungen ermöglichen. Die Fluidkanäle können durch nachträglich hergestellte Bohrungen gebildet sein. Vorzugsweise können die Bohrungen bereits im Rohteil der Gabelbrücke vorgesehen sein. Ferner können an den Verschraubungen der Fluidanschlüsse Anschläge zur Serienmontage der Bremsschläuche bzw. Leitungen vorgesehen sein.

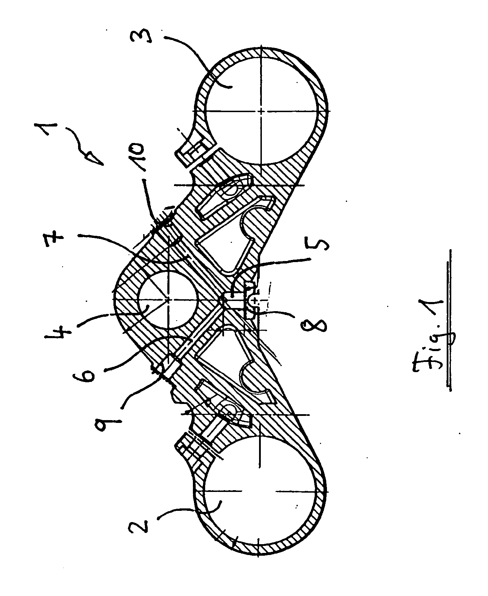

Im folgenden wird die Erfindung im Zusammenhang mit der einzigen Figur 1 näher erläutert. **Figur 1** zeigt eine Gabelbrücke 1 mit einer ersten und zweiten Aufnahme 2, 3 zur Aufnahme der Gabelrohre (nicht dargestellt) sowie einer dazwischenliegenden dritten Aufnahme 4, über welche die Gabelbrücke 1 über ein Lenkkopflager (nicht dargestellt) oder über ein Kugelgelenk und einem Hebel, der bei BMW-Motorrädern unter dem Begriff "Telelever" bekannt ist, z.B. mit dem Motorradrahmen verbunden ist.

In der Gabelbrücke 1 ist ein erster Fluidkanal 5 vorgesehen, der sich Y-förmig in zwei Zweigkanäle 6, 7 verzweigt, die hier jeweils nur durch gestrichelte Linien dargestellt sind. Am ersten Fluidkanal 5 sind im mittleren, dem Fahrer zugewandten hinteren Bereich der Gabelbrücke 1 ein erster Fluidanschluss 8 vorgesehen. Dementsprechend sind links bzw. rechts der Ausnehmung 4 im vorderen Bereich der Gabelbrücke 1 an den Mündungen der zwei Kanäle 6, 7 jeweils ein Fluidanschluss 9, 10 vorgesehen. Der Fluidanschluss 8 ist über eine Bremsleitung (nicht dargestellt) mit dem Handbremshebel (nicht dargestellt) verbunden. Von den Fluidanschlüssen 9, 10 führen Bremsleitungen (nicht dargestellt) nach unten zu der linken bzw. rechten Vorderradbremse.

## Patentansprüche

1. Gabelbrücke (1) zur Verbindung zweier Gabelrohre eines Motorrads, wobei die Gabelbrücke (1) einen Fluidkanal (5-7) mit einem ersten Fluidanschluss (8) und einem zweiten Fluidanschluss (9, 10) aufweist und der Fluidkanal (5-7) die Gabelbrücke (1) durchsetzt,
**dadurch gekennzeichnet, dass**
sich der Fluidkanal (5) ausgehend vom ersten Fluidschluss (8) in zwei Zweigkanäle (9, 6, 7) verzweigt, wobei am Ende des einen Zweigkanals (6) der zweite Fluidanschluss (9) und am Ende des anderen Zweigkanals (7) ein dritter Fluidanschluss (10) vorgesehen ist.

2. Gabelbrücke nach Anspruch 1, wobei der Fluidkanal (5) und die Zweigkanäle (6, 7) zueinander in der Form eines Y angeordnet sind.

3. Gabelbrücke nach Anspruch 1 oder 2, wobei der Fluidanschluss (8) des Fluidkanals (5) im fahrerseitigen Mittelbereich der Gabelbrücke (1) angeordnet ist und die Fluidanschlüsse (9, 10) der Zweigkanäle (6, 7) in einem linken bzw. rechten in Bezug auf den Fahrer vorderen Bereich der Gabelbrücke (1) angeordnet sind.

4. Gabelbrücke nach einem der Ansprüche 1 bis 3, wobei die Fluidanschlüsse (8-10) jeweils eine Gewindebohrung aufweisen.

5. Gabelbrücke nach einem der Ansprüche 1 bis 4, wobei der Fluidkanal (5) bzw. die Zweigkanäle (6,7) Bohrungen sind.

6. Gabelbrücke nach einem der Ansprüche 1 bis 5, wobei der Fluidkanal (5) bzw. die Zweigkanäle (6, 7) über die Fluidanschlüsse (8-10) mit Bremsleitungen eines Motorrads verbunden sind.

## Claims

1. A bridge (1) for connecting two fork pipes of a motorcycle, wherein the bridge (1) comprises a fluid duct (5 - 7) with a first fluid connection (8) and a second fluid connection (9, 10) and the fluid duct (5 - 7) extends through the bridge,
**characterised in that**
the fluid duct (5), starting from the first fluid connection (8), divides into two branch ducts (9, 6, 7), wherein a second fluid connection (9) is provided at the end of one branch duct (6) and a third fluid connection (10) and at the end of the other branch duct (7).

2. A bridge according to claim 1, wherein the fluid duct (5) and the branch ducts (6, 7) are disposed in a Y relative to one another.

3. A bridge according to claim 1 or claim 2, wherein the fluid connection (8) of the fluid duct (5) is disposed in the middle region of the bridge (1) on the driver's side and the fluid connections (9, 10) of the branch ducts (6, 7) are disposed in a left or right region of the bridge (1), in the front relative to the driver.

4. A bridge according to any of claims 1 to 3, wherein the fluid connections (8 - 10) each h ave a threaded bore.

5. A bridge according to any of claims 1 to 4, wherein the fluid duct (5) and/or the branch ducts (6, 7) are bores.

6. A bridge according to any of claims 1 to 5, wherein the fluid duct (5) and/or the branch ducts (6, 7) are connected to brake lines of a motorcycle via the fluid connections (8 - 10).

## Revendications

1. Té de fourche (1) pour relier deux tubes de fourche d'une moto, le té de fourche (1) présentant un canal à fluide (5-7) comportant un premier raccordement fluidique (8) et deux autres raccordements fluidiques (9, 10), le canal à fluide (5-7) traversant le té de fourche (1),
**caractérisé en ce que**
le canal à fluide (5) se divise en deux canaux secondaires (6, 7) à partir du premier raccordement fluidique (8), le deuxième raccordement fluidique (9) étant prévu sur l'extrémité de l'un des canaux secondaires (6) et un troisième raccordement fluidique (10) sur l'extrémité de l'autre canal secondaire (7).

2. Té de fourche selon la revendication 1,
dans lequel le canal à fluide (5) et les canaux secondaires (6, 7) forment un Y.

3. Té de fourche selon la revendication 1 ou 2,
dans lequel on dispose le raccordement fluidique (8) du canal à fluide (5) dans la zone centrale, côté conducteur, du té de fourche (1) et les raccordements fluidiques (9, 10) des canaux secondaires (6, 7) dans une zone avant gauche et droite du té de fourche (1) gauche respectivement droite par rapport au conducteur.

4. Té de fourche selon l'une des revendications 1 à 3,
dans lequel les raccordements fluidiques (8-10) présentent chacun un taraudage.

5. Té de fourche selon l'une des revendications 1 à 4,
dans lequel le canal à fluide (5) et les canaux secondaires (6, 7) sont des alésages.

6. Té de fourche selon l'une des revendications 1 à 5,
dans lequel le canal à fluide (5) et les canaux à fluide (6, 7) sont reliés à des conduites de frein d'une moto par l'intermédiaire des raccordements fluidiques (8-10).
